(19) Europäisches Patentamt
European Patent Office
Office européen des brevets

(11) EP 1 533 962 B1

(12) EUROPÄISCHE PATENTSCHRIFT

(45) Veröffentlichungstag und Bekanntmachung des Hinweises auf die Patenterteilung:
**11.11.2015 Patentblatt 2015/46**

(51) Int Cl.:
***H04L 25/08*** *(2006.01)*

(21) Anmeldenummer: **03026763.7**

(22) Anmeldetag: **21.11.2003**

# (54) Verfahren und Anordnung zur Unterdrückung von Störsignalen in einem Nutzsignal-Frequenzbereich eines analogen Ausgangssignals

Method and arrangement for suppressing interferences in the useful frequency band of an analog output signal

Procédé et dispositif de suppression d'interférences dans la bande de fréquences utile d'un signal analogique de sortie

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**25.05.2005 Patentblatt 2005/21**

(73) Patentinhaber: **Nokia Solutions and Networks GmbH & Co. KG**
**81541 Munich (DE)**

(72) Erfinder:
- **Fuchs, Armin, Dr.**
  **73326 Deggingen (DE)**
- **Jelonnek, Björn, Dr.**
  **89079 Ulm (DE)**
- **Wolff, Gunter, Dr.**
  **89081 Ulm (DE)**

(74) Vertreter: **Weidel, Gottfried et al**
**Nokia Solutions and Networks GmbH & Co. KG**
**CEF T&I IPR Patent Administration**
**80240 Munich (DE)**

(56) Entgegenhaltungen:
**EP-A- 0 092 083** **US-A- 4 868 572**
**US-A- 5 555 447**

- **CAO J ET AL: "OC-192 transmitter and receiver in standard 0.18- mu m CMOS" IEEE JOURNAL OF SOLID-STATE CIRCUITS, Bd. 37, Nr. 12, Dezember 2002 (2002-12), Seiten 1768-1780, XP002288148 IEEE,USA ISSN: 0018-9200**
- **KAWAI T ET AL: "CROSSTALK REDUCTION IN N X N WDM MULTI/DEMULTIPLEXERS BY CASCADING SMALL ARRAYED WAVEGUIDE GRATING (AWG'S)" JOURNAL OF LIGHTWAVE TECHNOLOGY, Bd. 15, Nr. 10, 1. Oktober 1997 (1997-10-01), Seiten 1929-1937, XP000703612 IEEE, NEW YORK, US ISSN: 0733-8724**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und eine Anordnung zur Unterdrückung von Störsignalen in einem Nutzsignal-Frequenzbereich eines analogen Ausgangssignals.

Eine beispielhafte Anordnung zur Bildung eines analogen Ausgangssignals AOUT aus einem parallelisierten digitalen Datensignal DS ist in FIG 7 dargestellt. Ein ähnliches Beispiel dieser Anordnung wird auch in Cao et al, OC-192 "Transmitter and Receiver in Standard 0.18-μm CMOS, 2002 beschrieben. Dabei bilden NpL=16 zueinander parallel übertragene digitale Einzeldatensignale D0 bis D15 das parallelisierte Datensignal DS. Die Einzeldatensignale D0 bis D15 werden beispielsweise durch eine digitale Signalverarbeitungseinrichtung DSV gebildet und gelangen über eine Leitungsbusstruktur LBS an einen Demultiplexer DEMUX, mit dessen Hilfe ein serielles digitales Datensignal DOUT aus den Einzeldatensignale D0 bis D15 gebildet wird.

Der Demultiplexer DEMUX wird dabei als Parallel-Seriell-Wandler PSW verwendet, der die mit einer Taktfrequenz fDATA angelieferten Einzeldatensignale D0 bis D15 in das serielle Datensignal DOUT mit einer Taktfrequenz fCLK umformt. Das serielle Datensignal DOUT gelangt an einen Digital-Analog-Wandler DAW, der das analoge Ausgangssignal AOUT in einem durch Frequenzen fout abgedeckten Frequenzbereich bildet.

Die Taktfrequenzen fCLK und fDATA weisen zur kontinuierlichen Bildung des seriellen Datensignals DOUT ein festes Teilerverhältnis fCLK/fDATA = 16 = NpL ("<u>n</u>umber of <u>p</u>arallel <u>l</u>ines", Anzahl paralleler Leitungen) auf. Das mit der Abkürzung NpL bezeichnete Teilerverhältnis wird also letztendlich von der Anzahl der digitalen Einzeldatensignale D0 bis D15 des parallelisierten Datensignals DS bestimmt.

Eine maximal nutzbare Bandbreite des analogen Ausgangssignals AOUT wird durch die Nyquist-Frequenz fNQ festgelegt, wobei hier gilt:

$$fNQ = 0{,}5*fCLK = 0{,}5*NpL*fDATA = 8*fDATA.$$

FIG 8 zeigt in Bezug auf FIG 7 ein Frequenzspektrum des analogen Ausgangssignals AOUT. Dabei ist horizontal das Verhältnis fOUT/fCLK aufgetragen, während vertikal dem analogen Ausgangssignal AOUT zugeordnete Pegelwerte P dargestellt sind.

Ein im analogen Ausgangssignal AOUT enthaltenes Nutzsignal NS bei einer Nutzfrequenz fNutz=1/4*fCLK weist einen schmalen Nutzsignal-Frequenzbereich FB mit einer Bandbreite von ungefähr 1/10*fCLK auf. Ebenso sind sogenannte Alias-Frequenzspektren AS1 und AS2 des Nutzsignals NS aufgezeigt, die bei den Frequenzen 3/4*fCLK, 5/4*fCLK, ..., auftreten.

Bedingt durch die digitale Signalverarbeitungseinrichtung DSV werden Störsignale SS mit der Taktfrequenz fDATA und deren Oberwellen gebildet, die durch Übersprechen in das analoge Ausgangssignal AOUT gelangen. In diesem Beispiel werden Störsignale mit der Frequenz fDATA = fCLK/NpL einschließlich deren Oberwellen gebildet, die zumindest teilweise auch in den Nutzsignal-Frequenzbereich FB fallen.

Für den Fall, dass das parallelisierte Datensignal DS mit Hilfe eines ΣΔ-Wandlers gebildet wird, ist im Frequenzspektrum FS noch ein Rauschspektrum RS des ΣΔ-Wandlers zu berücksichtigen.

Insbesondere bei hohen Signalanforderungen reichen analoge Schaltungsmaßnahmen, wie beispielsweise differentielle Leitungsführung, Siebglieder, Schirmungen, ..., für die Reduzierung der Störsignale SS nicht aus. Die analogen Schaltungsmaßnahmen sind zum Teil mit unverhältnismäßig hohem Aufwand verbunden. Gegebenenfalls muss auf wertvolle Nutzsignalbandbreite verzichtet werden, um die Störsignale SS aus dem Nutzsignalband auszuschließen, um so die erforderliche Signalqualität zu erzielen.

Es ist daher Aufgabe der vorliegenden Erfindung, bei einem analogen Ausgangssignal, das aus einem parallelisierten digitalen Datensignal gebildet wird, die Reduzierung von Störsignalen mit einfachen Mitteln zu verbessern.

Die Aufgabe der Erfindung wird durch ein Verfahren mit den Merkmalen des Patentanspruchs 1 und durch eine Anordnung mit den Merkmalen des Patentanspruchs 10 gelöst. Vorteilhafte Weiterbildungen sind in den jeweiligen Unteransprüchen angegeben.

Bei der vorliegenden Erfindung wurde erkannt, dass die eingangs geschilderte Störsignalproblematik durch die in der Digitaltechnik üblicherweise verwendete Anzahl an NpL Einzeldatensignalen, bzw. durch Bitbreiten, des digitalen parallelisierten Datensignals verursacht wird.

Ein typisches parallelisiertes digitales Datensignal weist üblicherweise 4, 8, 12, 16, ..., Einzeldatensignale auf, die über eine entsprechende Anzahl NpL=4*N paralleler Leitungen übertragen werden, d.h. die Anzahl NpL beinhaltet stets den Faktor 4. Bei der durchzuführenden Wandlung des parallelisierten digitalen Datensignals in ein serielles Datensignal weisen somit die zugehörigen Taktfrequenzen ebenfalls ein Teilerverhältnis auf, das den Faktor 4 beinhaltet. Durch diesen Faktor 4 im Teilerverhältnis und dadurch, dass sich viele Digitalschaltungen besonders vorteilhaft realisieren lassen, wenn sich das Nutzsignal bei der halben Nyquist-Frequenz, bzw. bei einem Viertel der Taktfrequenz, befindet, ergeben sich Störsignale, die zum Teil im Nutzsignal-Frequenzbereich liegen.

Erfindungsgemäß wird das eingangs beschriebene parallelisierte Datensignal, das NpL Einzeldatensignale aufweist, als erstes parallelisiertes Datensignal in ein zweites parallelisiertes Datensignal mit NpL' Einzeldatensignalen umgesetzt. Dabei weist sowohl das erste als auch das zweite parallelisierte Datensignal eine gleiche, jedoch im Vergleich zur Anordnung gemäß FIG 7 erhöhte Taktfrequenz auf, wodurch vorteilhaft verschiedene Taktfrequenzen innerhalb des digitalen Schaltungsteils vermieden werden. Damit werden sowohl die Einrichtung zur Datenratenanpassung als auch die digitale Signalverarbeitungseinrichtung mit jeweils gleicher Taktfrequenz angesteuert.

Im ersten parallelisierten Datensignal werden Pausen bei der Datenübertragung eingeführt, wodurch ein diskontinuierlicher Datenstrom beim parallelisierten ersten Datensignal gebildet wird. Dabei behalten einzelne Daten ihre Positionen im Datenstrom, eine mittlere Datenrate bleibt erhalten. Je nach Implementierung ist es auch möglich, während eines Taktzyklus einen Taktimpuls der erhöhten Taktfrequenz zu unterdrücken. Dabei ist jeweils zu gewährleisten, dass während eines derartigen Pausentakts keine gültigen Daten des parallelisierten ersten Datensignals übertragen werden. Der Pausentakt tritt dabei zufällig innerhalb eines Taktzyklus auf.

Zur Bildung eines kontinuierlichen seriellen Datensignals ergibt sich ein neues Teilerverhältnis NpL'= fCLK/fDATA2, das erfindungsgemäß den Faktor 4 nicht beinhaltet. Dadurch wird eine Datenratenanpassung bedingt, die in Abhängigkeit des gewählten neuen Teilerverhältnisses NpL' durchzuführen ist.

Durch das digitalseitig eingesetzte erfindungsgemäße Verfahren werden beim analogen Ausgangssignal Störsignale aus dem Nutzsignal-Frequenzbereich weitgehend verdrängt, bzw. werden bei den im Nutzsignal-Frequenzbereich verbleibenden Störsignalen Spitzenpegelwerte abgesenkt.

Eine einfache, nur geringen Aufwand erfordernde Realisierung wird dadurch ermöglicht, dass das erfindungsgemäße Verfahren digitalseitig eingesetzt wird. Eine bereits bestehende digitale Signalverarbeitungseinrichtung kann mit erhöhter Taktfrequenz logisch unverändert weiter benutzt werden.

In einer vorteilhaften Weiterbildung des erfindungsgemäßen Verfahrens wird ein zur Bildung des seriellen Datensignals verwendeter Demultiplexer mehrstufig ausgebildet, wodurch eine verbesserte Störsignalreduzierung bzw. -unterdrückung erreicht wird.

Im Folgenden wird die Erfindung anhand einer Zeichnung näher erläutert. Dabei zeigt:

- FIG 1 eine Anordnung zur Durchführung des erfindungsgemäßen Verfahrens,
- FIG 2 bezogen auf FIG 1 ein zugehöriges Frequenzspektrum mit analogem Ausgangssignal,
- FIG 3 einen zur erfindungsgemäßen Datenratenanpassung verwendeten Zwischenspeicher mit beispielhafter Belegung und mit einem zur Datenratenanpassung eingeführten Pausentakt,
- FIG 4 den Zwischenspeicher mit einer weiteren beispielhaften Belegung und mit zwei zur Datenratenanpassung eingeführten, zufällig aufeinanderfolgenden Pausentakte,
- FIG 5 eine Anordnung zur Durchführung des erfindungsgemäßen Verfahrens mit einem mehrstufig ausgebildeten Demultiplexer zur Datenratenanpassung,
- FIG 6 eine detaillierte Darstellung eines Teilbereichs des Frequenzspektrums aus FIG 2,
- FIG 7 die in der Beschreibungseinleitung beschriebene Anordnung zur Bildung eines analogen Ausgangssignals aus einem parallelisierten digitalen Datensignal, gemäß dem Stand der Technik, und
- FIG 8 das in der Beschreibungseinleitung beschriebene und auf FIG 7 bezogene Frequenzspektrum.

FIG 1 zeigt eine Anordnung zur Durchführung des erfindungsgemäßen Verfahrens.

Ein parallelisiertes erstes Datensignal DS21 mit einer zugeordneten Taktfrequenz fDATA2 wird durch eine digitale Signalverarbeitungseinrichtung DSV1 gebildet. Das parallelisierte Datensignal DS21 weist insgesamt NpL=16 zueinander parallel übertragene, digitale Einzeldatensignale D100 bis D115 auf, die über eine 16 Leitungen aufweisende Leitungsbusstruktur an eine Einrichtung zur Takt- und Datenratenanpassung TRA1 gelangen.

Die Einrichtung zur Takt- und Datenratenanpassung TRA1 bildet die insgesamt 16 Einzeldatensignale D100 bis D115 auf insgesamt NpL'=15 Einzeldatensignale D200 bis D214 ab, die wiederum ein parallelisiertes zweites Datensignal DS22 mit der gleichen, bereits dem ersten Datensignal DS21 zugeordneten Taktfrequenz fDATA2 bilden. Dieses gelangt an einen als Demultiplexer DEMUX1 ausgebildeten Parallel-Seriell-Wandler PSW1 zur Bildung eines kontinuierlichen seriellen Ausgangssignals DOUT1.

Unter der Voraussetzung einer bezüglich FIG 7 beibehaltenen kontinuierlichen Ausgangssignalbildung aus einem digitalen Signal gleicher Datenrate weist das digitale serielle Ausgangssignal DOUT1 ebenfalls die aus FIG 7 bekannte Taktfrequenz fCLK auf.

Das vom Demultiplexer DEMUX1 gebildete serielle digitale Ausgangsdatensignal DOUT1 gelangt an den Digital-Analog-Wandler DAW, der ein analoges Ausgangssignal AOUT1 in einem durch Frequenzen fOUT1 abgedeckten Frequenzbereich bildet.

Die Taktfrequenzen fCLK und fDATA2 weisen damit ein festes Teilerverhältnis NpL'= fCLK/fDATA2 = 15:1 auf.

Das Teilerverhältnis NpL' wird mit NpL'<NpL derart gewählt, dass das Teilerverhältnis NpL' den Faktor 4 nicht mehr enthält, bzw. dass das Teilerverhältnis NpL' durch den Faktor 4 nicht ganzzahlig teilbar ist.

Erfindungsgemäß werden die digitale Signalverarbeitungseinrichtung DSV1 und die Einrichtung zur Takt- und Datenratenanpassung TRA1 mit der Taktfrequenz:

$$fDATA2 = fCLK/NpL' = fDATA * NpL/NpL'$$

betrieben, wodurch sowohl das parallelisierte erste Datensignal DS1 als auch das parallelisierte zweite Datensignal DS2 die Taktfrequenz fDATA2 aufweisen.

Da die Einrichtung zur Takt- und Datenratenanpassung TRA1 insgesamt 16 Eingangsdatensignale in insgesamt 15 Ausgangssignale umsetzt, ist in der digitalen Signalverarbeitungseinrichtung DSV1 und in der Einrichtung zur Takt- und Datenratenanpassung TRA1 zur Vermeidung eines Datenüberlaufes bzw. eines Datenverlusts innerhalb eines aus 16 Takten bestehenden Taktzyklus der Taktfrequenz fDATA2 einmal eine Pause von einem Takt einzulegen. Während dieses Pausentakts werden keine gültigen Daten des parallelisierten ersten Datensignals übertragen. Dies wird anhand der Figuren FIG 3 und FIG 4 später beschrieben.

Diese eine Pause im Taktzyklus von 16 Takten wird, beispielsweise unter Verwendung einer Pseudozufallsfolge, unregelmäßig eingelegt, da bei regelmäßiger Wiederholung subharmonische Störsignale mit Frequenzen fSUB = fDATA2/NpL und ganzzahlige Vielfache davon zusätzlich erzeugt werden würden.
Das Verhältnis fCLK/fSUB = (NpL'*fDATA2)/(fDATA2/NpL) = NpL' * NpL = NpL'*4*N würde dann den Faktor "4" enthalten.

Durch das erfindungsgemäße Verfahren werden Spitzenpegel von Störsignalen und deren Oberwellen im Nutzsignal-Frequenzband des analogen Ausgangssignals AOUT1 vermieden bzw. reduziert.

Die Umsetzung des parallelisierten ersten Datensignals DS21 in das zweite Datensignal DS22 wird mit Hilfe eines in den Figuren FIG 3 und FIG 4 näher beschriebenen Zwischenspeichers durchgeführt.

Je weiter das neue Teilerverhältnis NpL' mit NpL'<NpL von NpL abweicht, desto höher ist die Taktfrequenz fDATA2 der digitalen Signalverarbeitungseinrichtung DSV1 zu wählen. Um Probleme einer Takterhöhung in der digitalen Signalverarbeitungseinrichtung DSV1 zu vermeiden, wird NpL' vorteilhafterweise möglichst nahe am Teilerverhältnis NpL gewählt.

Bei dem in FIG 1 beschriebenen Beispiel beträgt der Faktor für die Takterhöhung 16/15 und entspricht damit einer minimalen Taktfrequenzerhöhung um 6,7%.

Die in FIG 1 geschilderte Anordnung wurde für einen seriellen Datenstrom DOUT1 beschrieben, der eine Breite von einem Bit aufweist. Die Erfindung ist auch für einen m-Bit breiten seriellen Datenstrom anwendbar, wobei dann jeweils m Bit ein Datum bilden, das einen analogen Wert repräsentiert. Die analogen Werte bilden am Ausgang des Digital/Analog-Wandlers das analoge Ausgangssignal. In diesem Fall werden m*NpL parallele Einzeldatensignale der digitalen Signalverarbeitungseinrichtung DSV1 auf insgesamt m*NpL' Einzeldatensignale umgeformt.

FIG 2 zeigt bezogen auf FIG 1 ein Frequenzspektrum des analogen Ausgangssignals AOUT1. Dabei ist horizontal das Verhältnis fOUT1/fCLK aufgetragen, während vertikal dem analogen Ausgangssignal AOUT zugeordnete Pegelwerte P dargestellt sind.

Ein im analogen Ausgangssignal AOUT1 enthaltenes Nutzsignal NS1 bei einer Nutzfrequenz fNutz1=0,25*fCLK weist einen schmalen Nutzsignal-Frequenzbereich FB1 mit einer Bandbreite von ungefähr 0,1*fCLK auf. Ebenso sind sogenannte Alias-Frequenzspektren AS11 und AS12 des Nutzsignals NS1 aufgezeigt, die bei den Frequenzen, 3/4*fCLK, 5/4*fCLK, ..., auftreten.

Im Vergleich mit FIG 8 fallen hier jedoch durch das erfindungsgemäße Verfahren Störsignale SS1 nur teilweise und mit stark reduzierten Spitzenpegelwerten in den Nutzsignal-Frequenzbereich FB1 und in die Frequenzbereiche der Alias-Frequenzspektren AS11 und AS12, die bei weiteren Anwendungen gegebenenfalls als Nutzsignal-Frequenzbereiche verwendet werden. Somit ist die Erfindung auch für Anwendungen geeignet, die ein Aliasspektrum des Nutzsignals verwenden.

FIG 3 zeigt einen zur erfindungsgemäßen Datenratenanpassung verwendeten Zwischenspeicher mit beispielhafter Belegung. Der Zwischenspeicher ist dabei als FIFO-Speicher (First-In-First-Out, FIFO) ausgebildet und ist in der in FIG 1 dargestellten Einrichtung zur Takt- und Datenratenanpassung TRA1 angeordnet.

Zusammengehörige Daten bzw. Einzeldatensignale eines parallelisierten Datensignals werden mit identischen Buchstaben bezeichnet und tragen zur Unterscheidbarkeit Nummern in aufsteigender Reihenfolge. Der FIFO-Speicher weist im vorliegenden Beispiel für 16 digitale Eingangsdatensignale insgesamt fünfzehn Spalten Spalte 0 bis Spalte 14 und drei Zeilen Zeile 1 bis Zeile 3 auf.

Nachfolgend wird von folgendem Ablauf bei der Belegung des Zwischenspeichers pro Takt ausgegangen:

1. Alle in Zeile 3 abgelegten Daten werden parallel zueinander ausgegeben.
2. Die in Zeile 2 abgelegten Daten werden parallel zueinander an entsprechende Spalten der Zeile 3 übergeben und die in der Zeile 1 abgelegten Daten werden parallel zueinander an entsprechende Spalten der Zeile 2 übergeben.
3. Beginnend ab der Position des Zeigers Z werden 16 neue Daten bzw. Eingangsdatensignale eines parallelisierten digitalen Datensignals eingelesen, sofern kein Pausentakt vorliegt.
4. Der Zeiger Z wird um eine Stelle auf eine neue Position verschoben. Dabei gilt, dass der Zeiger Z, sofern kein Pausentakt vorliegt, um eine Spalte nach rechts geschoben wird. Nach einem Pausentakt hingegen wird der Zeiger um eine ganze Zeile nach unten geschoben.

Im Folgenden wird davon ausgegangen, dass bei einem Speicherzustand T10 der Zeiger Z auf Zeile 2, Spalte 10, zeigt.
In Zeile 3 sind Daten A7 bis A15 in Spalte 0 bis Spalte 8 abgelegt, während Daten B0 bis B5 in Spalte 9 bis Spalte 14 abgelegt sind.
In Zeile 2 sind Daten B6 bis B15 in Spalte 0 bis Spalte 9 abgelegt, während neue Daten C0 bis C4 beginnend ab der Zeigerposition in Spalte 10 bis Spalte 14 abgelegt werden.
In Zeile 1 werden neue Daten C5 bis C15 in Spalte 0 bis Spalte 10 abgelegt.
Der Zeiger Z wird um eine Spalte nach rechts auf eine neue Position in Zeile 2, Spalte 11, verschoben.
Nach einem Takt ändert sich der Speicherzustand T10 in den Speicherzustand T11.
Gemäß dem oben geschilderten Ablauf werden:

1. die bislang in Zeile 3 abgelegten Daten A7 bis A15 und B0 bis B5 parallel zueinander ausgegeben;
2. die bislang in Zeile 2 abgelegten Daten B6 bis B15 und C0 bis C4 werden an entsprechende Zellen der Zeile 3 übergeben, während die bislang in Zeile 1 abgelegten Daten C5 bis C15 an entsprechende Spalten der Zeile 2 übergeben werden;
3. beginnend ab der Zeigerposition werden beim Speicherzustand T11 in Zeile 2 neue Daten D0 bis D3 in Spalte 11 bis Spalte 14 und in Zeile 3 neue Daten D4 bis D15 in Spalte 0 bis Spalte 11 abgelegt; und
4. der Zeiger Z wird auf eine neue Position in Zeile 2, Spalte 12, geschoben.

Nachfolgend wird von einem Pausentakt PT beim Übergang vom Speicherzustand T11 in den Speicherzustand T12 ausgegangen. Gemäß dem oben geschilderten Ablauf werden:

1. die bislang in Zeile 3 abgelegten Daten B6 bis B15 und C0 bis C4 parallel zueinander ausgegeben;
2. die bislang in Zeile 2 abgelegten Daten C5 bis C15 und D0 bis D3 werden an entsprechende Zellen der Zeile 3 übergeben, während die bislang in Zeile 1 abgelegten Daten D4 bis D15 an entsprechende Spalten der Zeile 2 übergeben werden;
3. bedingt durch den Pausentakt werden keine neuen Daten in den Zwischenspeicher eingelesen; und
4. der Zeiger Z wird auf eine neue Position in Zeile 3, Spalte 12 geschoben.

Beim Übergang vom Speicherzustand T12 in den Speicherzustand T13 werden gemäß dem oben geschilderten Ablauf:

1. die bislang in Zeile 3 abgelegten Daten C5 bis C15 und D0 bis D3 parallel zueinander ausgegeben;
2. die bislang in Zeile 2 abgelegten Daten D4 bis D15 und E0 bis E2 werden an entsprechende Zellen der Zeile 3 übergeben,
3. beginnend ab der Zeigerposition werden beim Speicherzustand T13 in Zeile 1 neue Daten E0 bis E2 in Spalte 12 bis Spalte 14 und in Zeile 2 neue Daten E3 bis E15 in Spalte 0 bis Spalte 12 abgelegt; und
4. der Zeiger Z wird auf eine neue Position in Zeile 3, Spalte 13 geschoben.

FIG 4 zeigt den Zwischenspeicher mit einer weiteren beispielhaften Belegung und mit zwei zur Datenratenanpassung eingeführten, zufällig aufeinanderfolgenden Pausentakten. Bei diesem Ausführungsbeispiel werden alle Speicherzellen des Zwischenspeichers verwendet.
Ein Taktzyklus weist jeweils 16 Takte auf. Die Speicherzustände T14 und T15 gehören zu den beiden letzten Takten eines ablaufenden Taktzyklus. Beim Speicherzustand T0 beginnt ein neuer Taktzyklus, wobei in jedem Taktzyklus genau einmal ein Pausentakt PT auftritt.
Im Folgenden wird davon ausgegangen, dass nach Ablauf einer Anzahl an Taktzyklen bei einem Speicherzustand T14 der Zeiger Z auf Zeile 2, Spalte 14, zeigt.
In Zeile 3 sind Daten A3 bis A15 in Spalte 0 bis Spalte 12 abgelegt, während Daten B0 und B1 in Spalte 13 und in Spalte 14 abgelegt sind.
In Zeile 2 sind Daten B2 bis B15 in Spalte 0 bis Spalte 13 abgelegt, während neue Daten C0 beginnend ab der Zeigerposition in Spalte 14 abgelegt werden. In Zeile 1 werden neue Daten C1 bis C15 in Spalte 0 bis Spalte 14 abgelegt.
Der Zeiger Z wird um eine Spalte nach rechts auf eine neue Position in Zeile 1, Spalte 0, verschoben.

Nachfolgen wird von einem Pausentakt PT beim Übergang vom Speicherzustand T14 in den Speicherzustand T15 ausgegangen.

Gemäß dem oben geschilderten Ablauf werden:

1. die bislang in Zeile 3 abgelegten Daten A3 bis A15, B0 und B1 parallel zueinander ausgegeben;
2. die bislang in Zeile 2 abgelegten Daten B2 bis B15 und C0 an entsprechende Zellen der Zeile 3 übergeben, während die bislang in Zeile 1 abgelegten Daten C1 bis C15 an entsprechende Spalten der Zeile 2 übergeben werden;
3. bedingt durch den Pausentakt werden keine neuen Daten in den Zwischenspeicher eingelesen; und
4. der Zeiger Z wird auf eine neue Position in Zeile 2, Spalte 0, geschoben.

Nachfolgen wird von einem weiteren Pausentakt PT beim Übergang vom Speicherzustand T15 in den Speicherzustand T0 ausgegangen.

Gemäß dem oben geschilderten Ablauf werden:

1. die bislang in Zeile 3 abgelegten Daten B2 bis B15 und C0 parallel zueinander ausgegeben;
2. die bislang in Zeile 2 abgelegten Daten C1 bis C15 werden an entsprechende Zellen der Zeile 3 übergeben;
3. bedingt durch den Pausentakt PT werden keine neuen Daten in den Zwischenspeicher eingelesen; und
4. der Zeiger Z wird auf eine neue Position in Zeile 3, Spalte 0 geschoben.

Beim Übergang vom Speicherzustand T0 in den Speicherzustand T1 werden gemäß dem oben geschilderten Ablauf:

1. die bislang in Zeile 3 abgelegten Daten C1 bis C15 parallel zueinander ausgegeben;
2. die Spalten der Zeile 2 und der Zeile 1 sind leer, eine Übergabe findet somit quasi nicht statt,
3. beginnend ab der Zeigerposition werden beim Speicherzustand T1 in Zeile 3 neue Daten D0 bis D14 in Spalte 0 bis Spalte 14 und in Zeile 2 neue Daten D15 abgelegt; und
4. der Zeiger Z wird auf eine neue Position geschoben.

FIG 5 zeigt eine Anordnung zur Durchführung des erfindungsgemäßen Verfahrens mit einem mehrstufig ausgebildeten Demultiplexer.

Ein parallelisiertes Datensignal DS3 wird durch eine digitale Signalverarbeitungseinrichtung DSV3 gebildet. Das parallelisierte Datensignal DS3 weist insgesamt 16 zueinander parallel übertragene, digitale Einzeldatensignale D300 bis D315 auf, die an eine Einrichtung zur Takt- und Datenratenanpassung TRA3 gelangen. Die Einrichtung zur Takt- und Datenratenanpassung TRA3 bildet die insgesamt 16 Einzeldatensignale D300 bis D315 auf insgesamt 15 Einzeldatensignale D400 bis D414 ab.

Die 15 Einzeldatensignale D400 bis D414 bilden wiederum ein parallelisiertes Datensignal DS4, das an einen als Demultiplexer DEMUX3 ausgebildeten Parallel-Parallel-Wandler PPW3 gelangt. Dieser bildet aus den 15 Einzeldatensignalen D400 bis D414 ein insgesamt drei Einzeldatensignale D500 bis D502 aufweisendes parallelisiertes Datensignal DS5 mit der Taktfrequenz fCLK/3, das an einen als Demultiplexer DEMUX4 ausgebildeten Parallel-Seriell-Wandler PSW4 gelangt. Dieser bildet ein serielles digitales Ausgangsdatensignal DOUT3.

Mit Hilfe der Einrichtung zur Takt- und Datenratenanpassung TRA3 erfolgt eine Anpassung der Datenrate von 16:15, während mit Hilfe des Demultiplexers DEMUX3 eine Anpassung der Datenrate von 15:3 durchgeführt wird.

Erfindungsgemäß wird bei der Umsetzung der jeweiligen parallelisierten Datensignale der Faktor 4 in den jeweiligen Teilerverhältnissen vermieden.

Außerdem können beide (Takt-)Teilerverhältnisse mit 5:1 und mit 3:1 relativ klein gewählt werden, da das Gesamtteilerverhältnis 15:1 keine großen Primfaktoren enthält.

Die Größe des sowohl in FIG 1 als auch in FIG 5 jeweils benötigten Zwischenspeichers wächst zunächst mit größer werdender Differenz zwischen den Teilerverhältnissen NpL und NpL' an und errechnet sich zu:

$$\text{Puffergröße} = NpL' * (1+2*(NpL-NpL'))$$

mit NpL' als Spaltenanzahl und
mit (1+2*(NpL-NpL') als Zeilenanzahl.

Mit den Werten aus FIG 1 ergibt sich eine Puffergröße des Zwischenspeichers von:

$$\text{Puffergröße} = 15*(1+2*(16-15) = 15 \text{ Spalten} * 3 \text{ Zeilen.}$$

Es ist jedoch auch möglich, durch Einschränkungen bei der Pausenwahl einen Zwischenspeicher mit einer geringeren Kapazität zu verwenden.

Weiter könnte die letzte Zeile des Zwischenspeichers ohne Einschränkung bei der Pausenwahl dann entfallen, wenn mit Hilfe des Zeigers Z direkt auf den Ausgang zugegriffen wird. Die letzte Zeile des Zwischenspeichers wäre dann als parallele Ausgangsleitung ausgebildet. Damit ergäbe sich die Puffergröße wie folgt:

$$\text{Puffergröße} = NpL'*2*(NpL-NpL')$$

Das Teilerverhältnis NpL' wird bevorzugt derart gewählt, dass es keine großen Primfaktoren aufweist, um den Aufwand bei der Parallel-Seriell-Wandlung zu minimieren.

Zweckmäßigerweise wird das Teilerverhältnis NpL' beginnend bei NpL-1 bis zu einem Wert schrittweise verringert, der weder den Faktor 4 ganzzahlig beinhaltet und idealerweise keinen zu großen Primfaktor aufweist.

FIG 6 zeigt einen Teilbereich des in FIG 2 dargestellten Frequenzspektrums mit Störsignalen beim Teilerverhältnis NpL'= 15.

Zum Vergleich sind subharmonische Störlinien SL mit Oberwellen eingetragen, die bei regelmäßig auftretenden Pausentakten entstehen würden. Durch das erfindungsgemäße unregelmäßige Auftreten des Pausentakts hingegen entstehen keine subharmonischen Störlinien, da deren Energie E gleichmäßig im gesamten Frequenzspektrum verteilt wird, hier schraffiert dargestellt. Somit wird der Spitzenstörpegel abgesenkt.

## Patentansprüche

1. Verfahren zur Unterdrückung von Störsignalen (SS1) in einem Nutzsignal-Frequenzbereich (FB1) eines analogen Ausgangssignals (AOUT1),

   - bei dem ein parallelisiertes digitales erstes Datensignal (DS21), das insgesamt NpL zueinander parallel übertragene Einzeldatensignale (D100, ..., D115) umfasst, in ein parallelisiertes digitales zweites Datensignal (DS22) mit NpL' Einzeldatensignalen (D200, ..., D214) umgewandelt wird, wobei die Anzahl NpL ungleich zur Anzahl NpL' gewählt wird und wobei das parallelisierte erste Datensignal (DS21) und das parallelisierte zweite Datensignal (DS22) eine gleiche Taktfrequenz (fDATA2) aufweisen,
   - bei dem das parallelisierte zweite Datensignal (DS22) zur Bildung eines seriellen Datensignals (DOUT1) parallel-seriell gewandelt und nachfolgend zur Bildung des analogen Ausgangssignals (AOUT1) digital-analog gewandelt wird.

2. Verfahren nach Anspruch 1, bei dem zur Anpassung der Datenrate bei der Umwandlung des parallelisierten ersten Datensignals (DS21) in das parallelisierte zweite Datensignal (DS22) Pausentakte verwendet werden, bei deren Auftreten keine gültigen Daten des parallelisierten ersten Datensignals (DS21) übertragen werden, während das parallelisierte zweiten Datensignal (DS22) kontinuierlich gebildet wird.

3. Verfahren nach Anspruch 2, bei dem zumindest ein Pausentakt zufällig innerhalb eines Taktzyklus eingefügt wird.

4. Verfahren nach einem der vorhergehenden Ansprüche, bei dem die Taktfrequenz der beiden parallelisierten Datensignale (DS21, DS22) errechnet wird aus:

   $$fDATA2 = fCLK/NpL' = fDATA * NpL/NpL'$$

   mit:

   fDATA2 als Taktfrequenz der beiden parallelisierten Datensignale (DS21, DS22),
   fCLK als Taktfrequenz des seriellen Datensignals (DOUT1), und mit
   fDATA = fCLK/NpL.

**5.** Verfahren nach einem der vorhergehenden Ansprüche,

- bei dem das erste parallelisierte Datensignal (DS21) mit n=1, 2, ..., durch insgesamt NpL=4*n Einzeldatensignale (D100,...) gebildet wird, und
- bei dem die Anzahl NpL' derart gewählt wird, dass NpL' keinen Faktor mit einem Wert="4" enthält.

**6.** Verfahren nach einem der vorhergehenden Ansprüche, bei dem für die Anzahl NpL' und für die Anzahl NpL gilt:

$$NpL' < NpL.$$

**7.** Verfahren nach einem der vorhergehenden Ansprüche,

- bei dem das serielle Datensignal (DOUT1) als m-Bit breiter serieller Datenstrom übertragen wird, wobei jeweils m Bit ein Datum bilden, das einen Wert des analogen Ausgangssignals (AOUT1) repräsentiert, und
- bei dem m*NpL parallele Einzeldatensignale des parallelisierten ersten Datensignals (DS21) in insgesamt m*NpL' Einzeldatensignale des parallelisierten zweiten Datensignals (DS22) umgewandelt werden.

**8.** Einrichtung zur Datenratenanpassung (TRA1),

- die insgesamt NpL Eingänge zur Aufnahme von NpL zueinander parallel übertragener Einzeldatensignale eines digitalen parallelisierten ersten Datensignals (DS21) aufweist,
- die insgesamt NpL' Ausgänge für NpL' Einzeldatensignale eines digitalen parallelisierten zweiten Datensignals (DS21) aufweist, wobei die Anzahl NpL ungleich zur Anzahl NpL' ist, und
- die einen Speicher zur Umformung der Einzeldatensignale (DS21, DS22) beinhaltet, dessen Taktfrequenz (fDATA2) für das eingangsseitig zugeführte parallelisierte erste Datensignal (DS21) gleich der Taktfrequenz (fDATA2) für das parallelisierte zweite Datensignal (DS22) gewählt ist.

**9.** Einrichtung nach Anspruch 8, bei der der Speicher als FIFO-Speicher ausgebildet ist und seine Puffergröße bestimmt ist durch:

$$\text{Puffergröße} = NpL' * (1+2*(NpL-NpL'))$$

oder bestimmt ist durch:

$$\text{Puffergröße} = NpL' * 2 * (NpL-NpL')$$

**10.** Anordnung zur Unterdrückung von Störsignalen in einem Nutzsignal-Frequenzbereich eines analogen Ausgangssignals mit einer Einrichtung zur Datenratenanpassung nach Anspruch 8 oder 9,

- bei der der Einrichtung zur Datenratenanpassung (TRA1) eine digitale Signalverarbeitungseinrichtung (DSV1) zur Bildung des parallelisierten ersten Datensignals (DS21) vorgeschaltet ist,
- bei der die Taktfrequenz (fDATA2) der digitalen Signalverarbeitungseinrichtung (DSV1) und die Taktfrequenz (fDATA2) der Einrichtung zur Datenratenanpassung (TRA1) gleich gewählt ist, und
- bei der der Einrichtung zur Datenratenanpassung (TRA1) eine Serienschaltung aus einem Parallel-Seriell-Wandler (PSW1) und aus einem Digital-Analog-Wandler (DAW) zur Umwandlung des parallelisierten zweiten Datensignals (DS22) in ein serielles Datensignal (DOUT1) und zur weiteren Umwandlung des seriellen Datensignals (DOUT1) in das analoge Ausgangssignal (AOUT1) nachgeschaltet ist.

**11.** Anordnung nach Anspruch 10,

- bei der das serielle Datensignal (DOUT1) eine Breite von m-Bit aufweist, wobei jeweils m Bit ein Datum bilden, das einen Wert des analogen Ausgangssignals (AOUT1) repräsentiert,
- bei der das parallelisierte erste Datensignal (DS21) insgesamt m*NpL Einzeldatensignale und das parallelisierte zweite Datensignal (DS22) insgesamt m*NpL' Einzeldatensignale aufweist, und

- bei der die Einrichtung zur Takt- und Datenratenanpassung (TRA1) insgesamt m*NpL Eingänge und m*NpL'Ausgänge aufweist sowie einen entsprechend erweiterten Speicher beinhaltet.

## Claims

1. Method for rejecting unwanted signals (SS1) in a useful signal frequency range (FB1) of an analogue output signal (AOUT1),

   - in which a parallelized digital first data signal (DS21), which comprises a total of NpL single data signals (D100, ..., D115) transmitted in parallel with one another, is converted into a parallelized digital second data signal (DS22) having NpL' single data signals (D200, ..., D214), wherein the number NpL is chosen not to be the same as the number NpL' and wherein the parallelized first data signal (DS21) and the parallelized second data signal (DS22) have the same clock frequency (fDATA2),
   - in which the parallelized second data signal (DS22) undergoes parallel-to-serial conversion to form a serial data signal (DOUT1) and subsequently undergoes digital-to-analogue conversion to form the analogue output signal (AOUT1).

2. Method according to Claim 1, in which conditioning of the data rate during the conversion of the parallelized first data signal (DS21) into the parallelized second data signal (DS22) involves the use of idle cycles, the occurrence of which prompts no valid data from the parallelized first data signal (DS21) to be transmitted while the parallelized second signal (DS22) is continuously formed.

3. Method according to Claim 2, in which at least one idle cycle is inserted randomly within a clock cycle.

4. Method according to one of the preceding claims, in which the clock frequency of the two parallelized data signals (DS21, DS22) is computed from:

$$fDATA2 = fCLK/NpL' = fDATA * NpL/NpL'$$

   with:

   fDATA2 as the clock frequency of the two parallelized data signals (DS21, DS22),
   fCLK as the clock frequency of the serial data signal (DOUT1), and with
   fDATA = fCLK/NpL.

5. Method according to one of the preceding claims,

   - in which the first parallelized data signal (DS21) is formed by a total of NpL=4*n single data signals (D100, ...), with n=1, 2, ..., and
   - in which the number NpL' is chosen such that NpL' does not contain a factor with a value = "4".

6. Method according to one of the preceding claims, in which the following is true for the number NpL' and for the number NpL:

   NpL'<NpL.

7. Method according to one of the preceding claims,

   - in which the serial data signal (DOUT1) is transmitted as an m-bit serial data stream, wherein m respective bits form a datum that represents a value of the analogue output signal (AOUT1), and
   - in which m*NpL parallel single data signals of the parallelized first data signal (DS21) are converted into a total of m*NpL' single data signals of the parallelized second data signal (DS22).

8. Device for data rate conditioning (TRA1),

- which has a total of NpL inputs for receiving NpL single data signals, transmitted in parallel with one another, of a digital parallelized first data signal (DS21),
- which has a total of NpL' outputs for NpL' single data signals of a digital parallelized second data signal (DS21), the number NpL not being the same as the number NpL', and
- which contains a memory for reshaping the single data signals (DS21, DS22), the clock frequency (fDATA2) of said memory for the parallelized first data signal (DS21) supplied at the input being chosen to be the same as the clock frequency (fDATA2) for the parallelized second data signal (DS22).

**9.** Device according to Claim 8, in which the memory is in the form of an FIFO memory and its buffer size is determined by:

$$\text{buffer size} = NpL' * (1+2*(NpL-NpL'))$$

or is determined by:

$$\text{buffer size} = NpL' * 2 * (NpL-NpL')$$

**10.** Arrangement for rejecting unwanted signals in a useful signal frequency range of an analogue output signal, having a device for data rate conditioning according to Claim 8 or 9,

- in which the device for data rate conditioning (TRA1) has a digital signal processing device (DSV1) connected upstream of it for forming the parallelized first data signal (DS21),
- in which the clock frequency (fDATA2) of the digital signal processing device (DSV1) and the clock frequency (fDATA2) of the device for data rate conditioning (TRA1) are chosen to be the same, and
- in which the device for data rate conditioning (TRA1) has a series circuit comprising a parallel-to-serial converter (PSW1) and comprising a digital-to-analogue converter (DAW) connected downstream of it for converting the parallelized second data signal (DS22) into a serial data signal (DOUT1) and for additionally converting the serial data signal (DOUT1) into the analogue output signal (AOUT1).

**11.** Arrangement according to Claim 10,

- in which the serial data signal (DOUT1) has a length of m bits, wherein m respective bits form a datum that represents a value of the analogue output signal (AOUT1),
- in which the parallelized first data signal (DS21) has a total of m*NpL single data signals and the parallelized second data signal (DS22) has a total of mNpL' single data signals, and
- in which the device for clock and data rate conditioning (TRA1) has a total of m*NpL inputs and m*NpL' outputs and contains a correspondingly extended memory.

## Revendications

**1.** Procédé de suppression de signaux parasites (SS1) dans une plage de fréquences de signaux utiles (FB1) d'un signal de sortie analogique (AOUT1), selon lequel :

- un premier signal de données numérique parallélisé (DS21), qui comprend un total de NpL signaux de données individuels (D100, ..., D115) transmis parallèlement entre eux, est converti en un deuxième signal de données (DS22) numérique parallélisé avec NpL' signaux de données individuels (D200, ..., D214), le nombre NpL étant choisi non égal au nombre NpL' et le premier signal de données parallélisé (DS21) et le deuxième signal de données parallélisé (DS22) ayant une même fréquence d'horloge (fDATA2) ;
- le deuxième signal de données parallélisé (DS22) subit une conversion parallèle-série pour former un signal de données sériel (DOUT1) et ensuite une conversion numérique-analogique pour former le signal de sortie analogique (AOUT1).

**2.** Procédé selon la revendication 1, selon lequel sont utilisés, pour adapter le débit de données lors de la conversion du premier signal de données parallélisé (DS21) en le deuxième signal de données parallélisé (DS22), des cycles de pause lors de la survenance desquels aucune donnée valable du premier signal de données parallélisé (DS21) n'est transmise, tandis que le deuxième signal de données parallélisé (DS22) est formé continuellement.

**3.** Procédé selon la revendication 2, selon lequel au moins un cycle de pause est inséré aléatoirement dans un cycle d'horloge.

**4.** Procédé selon l'une des revendications précédentes, selon lequel la fréquence d'horloge des deux signaux de données parallélisés (DS21, DS22) est calculée à partir de :

$$fDATA2 = fCLK/NpL' = fDATA * NpL/NpL'$$

où :

fDATA2 est la fréquence d'horloge des deux signaux de données parallélisés (DS21, DS22) ;
fCLK est la fréquence d'horloge du signal de données sériel (DOUT1) et
fDATA = fCLK/NpL.

**5.** Procédé selon l'une des revendications précédentes, selon lequel :

- le premier signal de données parallélisé (DS21), avec n=1, 2, ..., est formé par un total de NpL=4*n signaux de données individuels (D100, ...) et
- le nombre NpL' est choisi tel que NpL' ne contient pas de facteur d'une valeur = « 4 ».

**6.** Procédé selon l'une des revendications précédentes, selon lequel on a, pour le nombre NpL' et pour le nombre NpL :

NpL' < NpL.

**7.** Procédé selon l'une des revendications précédentes, selon lequel :

- le signal de données sériel (DOUT1) est transmis en tant que flux de données sériel d'une largeur de m bits, m bits constituant respectivement une donnée qui représente une valeur du signal de sortie analogique (AOUT1) et
- m*NpL signaux de données individuels parallèles du premier signal de données parallélisé (DS21) sont convertis en un total de m*NpL' signaux de données individuels du deuxième signal de données parallélisé (DS22).

**8.** Dispositif d'adaptation du débit de données (TRA1),

- comportant un total de NpL entrées pour l'enregistrement de NpL signaux de données individuels transmis parallèlement entre eux d'un premier signal de données parallélisé numérique (DS21) ;
- comportant un total de NpL' sorties pour NpL' signaux de données individuels d'un deuxième signal de données parallélisé numérique (DS21), le nombre NpL étant différent du nombre NpL' et
- comprenant une mémoire pour la transformation des signaux de données individuels (DS21, DS22), dont la fréquence d'horloge (fDATA2) pour le premier signal de données parallélisé amené côté entrée (DS21) est choisie égale à la fréquence d'horloge (fDATA2) pour le deuxième signal de données parallélisé (DS22).

**9.** Dispositif selon la revendication 8, selon lequel la mémoire est réalisée sous la forme d'une mémoire FIFO et sa taille tampon est déterminée par :

$$\text{taille du tampon} = NpL' * (1+2*(NpL-NpL'))$$

ou par

$$\text{taille du tampon} = NpL' * 2 * (NpL-NpL').$$

**10.** Arrangement pour supprimer des signaux parasites dans une plage de fréquences de signaux utiles d'un signal de sortie analogique, comportant un dispositif d'adaptation du débit de données selon la revendication 8 ou 9, et selon lequel :

- est monté, en amont du dispositif d'adaptation du débit des données (TRA1), un dispositif numérique de traitement de signaux (DSV1) pour former le premier signal de données parallélisé (DS21) ;
- la fréquence d'horloge (fDATA2) du dispositif numérique de traitement de signaux (DSV1) et la fréquence d'horloge (fDATA2) du dispositif d'adaptation du débit de données (TRA1) sont choisies identiques et
- est monté, en aval du dispositif d'adaptation du débit de données (TRA1), un montage série composé d'un convertisseur parallèle-série (PSW1) et d'un convertisseur numérique-analogique (DAW) pour convertir le deuxième signal de données parallélisé (DS22) en un signal de données série (DOUT1) et pour ensuite convertir le signal de données sériel (DOUT1) en le signal de sortie analogique (AOUT1).

**11.** Arrangement selon la revendication 10, dans lequel :

- le signal de données sériel (DOUT1) a une largeur de m bits, m bits constituant respectivement une donnée qui représente une valeur du signal de sortie analogique (AOUT1) ;
- le premier signal de données parallélisé (DS21) comporte un total de m*NpL signaux de données individuels et le deuxième signal de données parallélisé (DS22) comporte un total de m*NpL*'* signaux de données individuels et
- le dispositif d'adaptation du rythme d'horloge et du débit de données (TRA1) comporte un total de m*NpL entrées et de m*NpL*'* sorties ainsi qu'une mémoire élargie en conséquence.

FIG 1

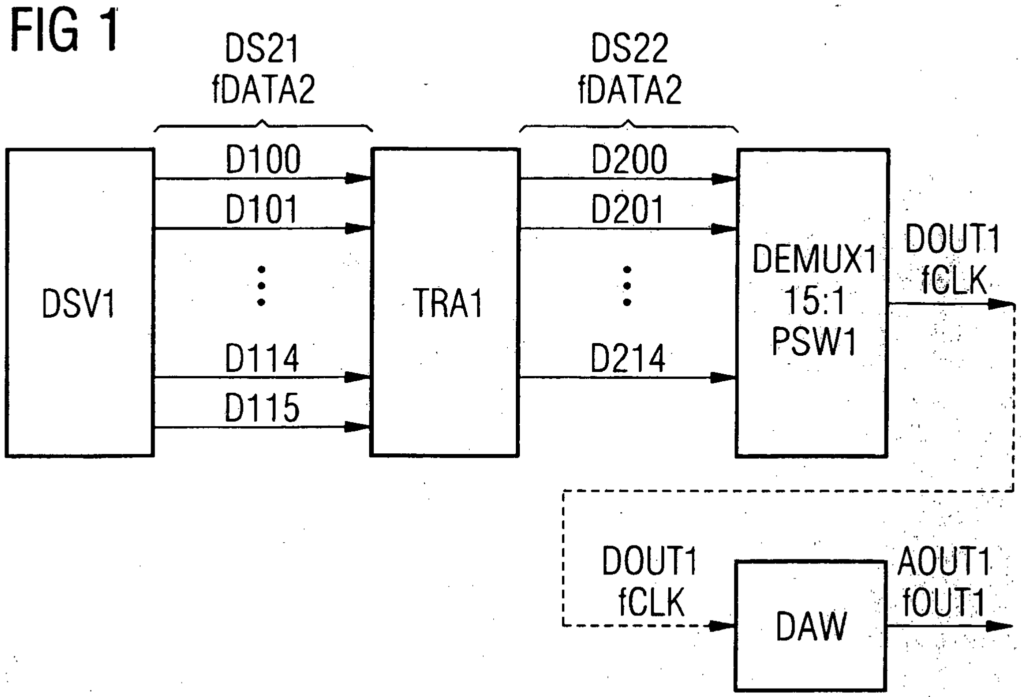
DS21
fDATA2
DS22
fDATA2
D100
D101
D114
D115
D200
D201
D214
DSV1
TRA1
DEMUX1
15:1
PSW1
DOUT1
fCLK
DOUT1
fCLK
DAW
AOUT1
fOUT1

FIG 2

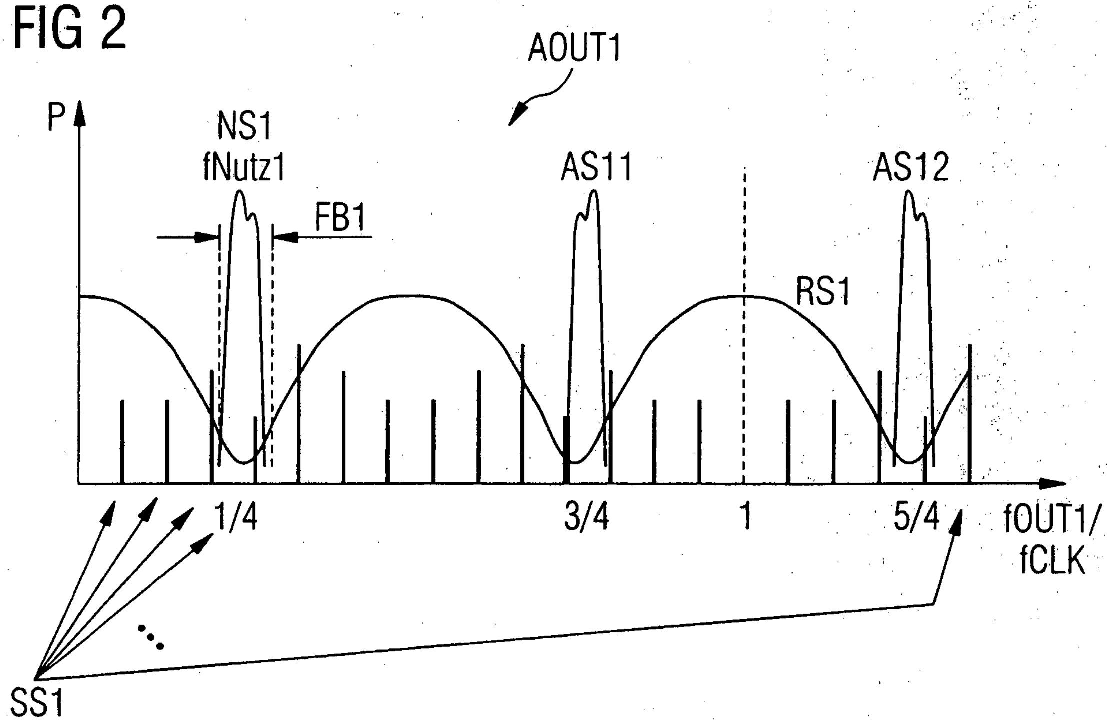
AOUT1
P
NS1
fNutz1
FB1
AS11
AS12
RS1
1/4
3/4
1
5/4
fOUT1/
fCLK
SS1

FIG 3A

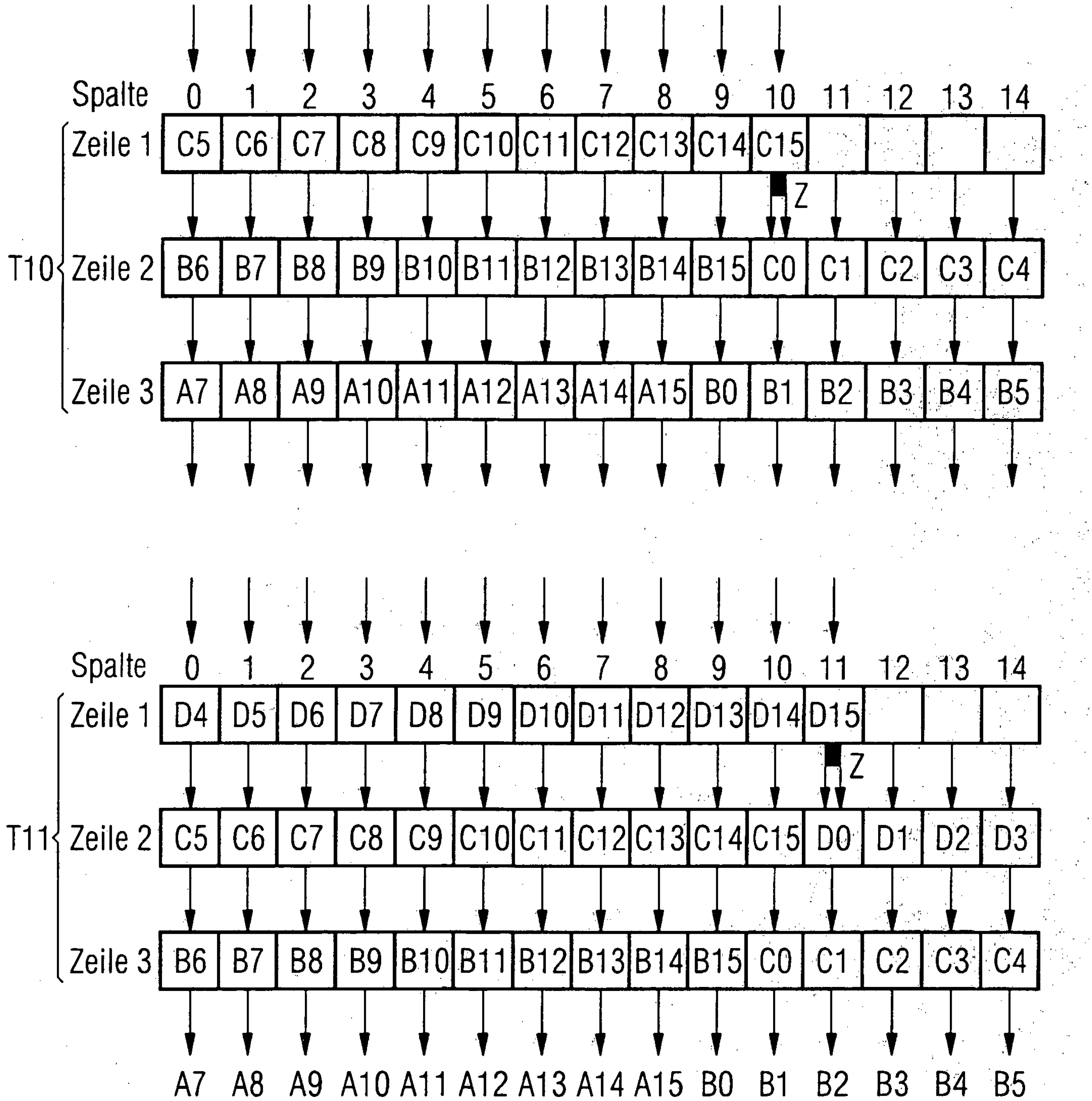
Spalte 0 1 2 3 4 5 6 7 8 9 10 11 12 13 14
Zeile 1 C5 C6 C7 C8 C9 C10 C11 C12 C13 C14 C15
Z
T10
Zeile 2 B6 B7 B8 B9 B10 B11 B12 B13 B14 B15 C0 C1 C2 C3 C4
Zeile 3 A7 A8 A9 A10 A11 A12 A13 A14 A15 B0 B1 B2 B3 B4 B5
Spalte 0 1 2 3 4 5 6 7 8 9 10 11 12 13 14
Zeile 1 D4 D5 D6 D7 D8 D9 D10 D11 D12 D13 D14 D15
Z
T11
Zeile 2 C5 C6 C7 C8 C9 C10 C11 C12 C13 C14 C15 D0 D1 D2 D3
Zeile 3 B6 B7 B8 B9 B10 B11 B12 B13 B14 B15 C0 C1 C2 C3 C4
A7 A8 A9 A10 A11 A12 A13 A14 A15 B0 B1 B2 B3 B4 B5

FIG 3B

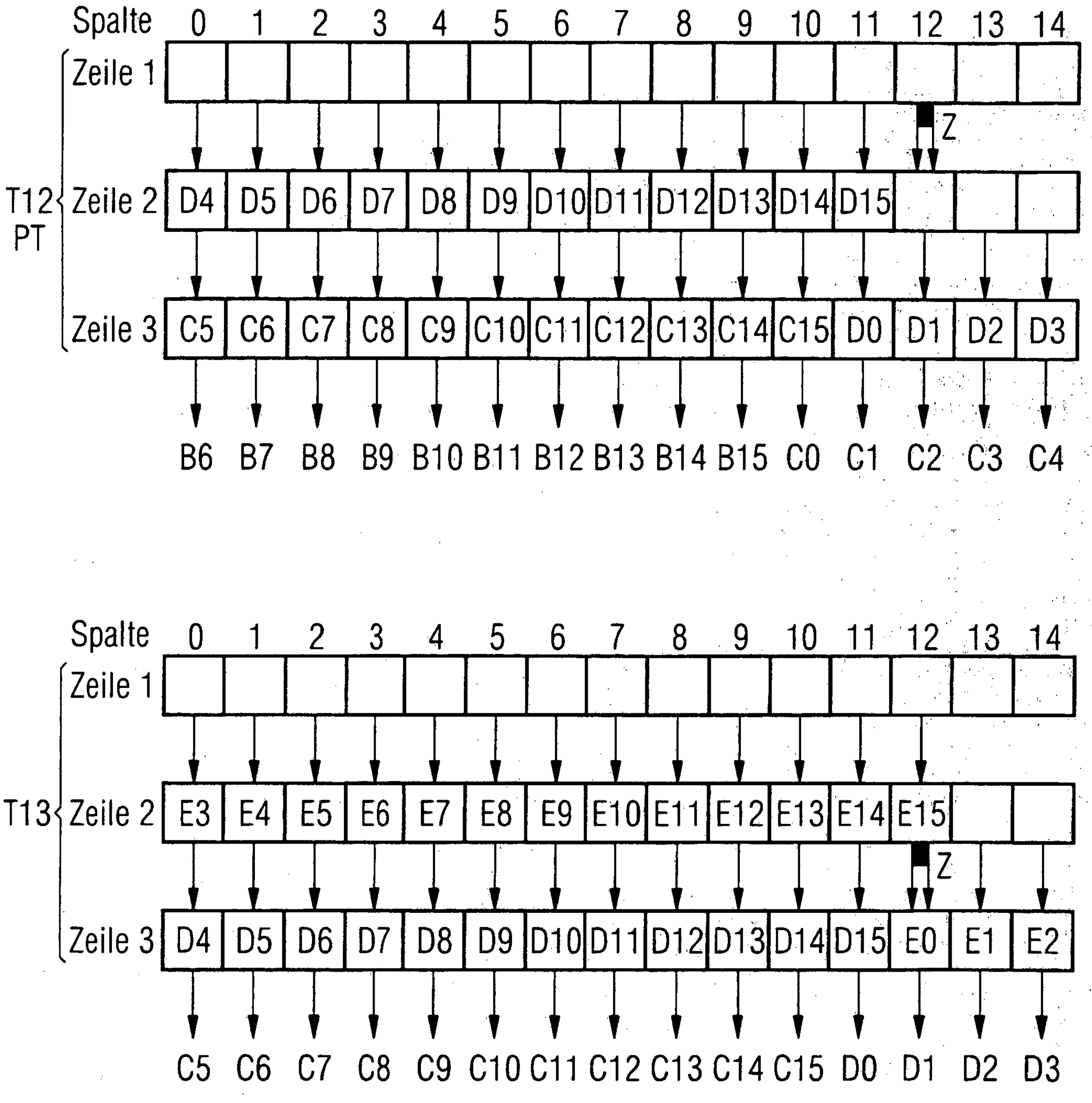
Spalte 0 1 2 3 4 5 6 7 8 9 10 11 12 13 14
Zeile 1
Z
T12
PT
Zeile 2 D4 D5 D6 D7 D8 D9 D10 D11 D12 D13 D14 D15
Zeile 3 C5 C6 C7 C8 C9 C10 C11 C12 C13 C14 C15 D0 D1 D2 D3
B6 B7 B8 B9 B10 B11 B12 B13 B14 B15 C0 C1 C2 C3 C4
Spalte 0 1 2 3 4 5 6 7 8 9 10 11 12 13 14
Zeile 1
T13
Zeile 2 E3 E4 E5 E6 E7 E8 E9 E10 E11 E12 E13 E14 E15
Z
Zeile 3 D4 D5 D6 D7 D8 D9 D10 D11 D12 D13 D14 D15 E0 E1 E2
C5 C6 C7 C8 C9 C10 C11 C12 C13 C14 C15 D0 D1 D2 D3

FIG 4A

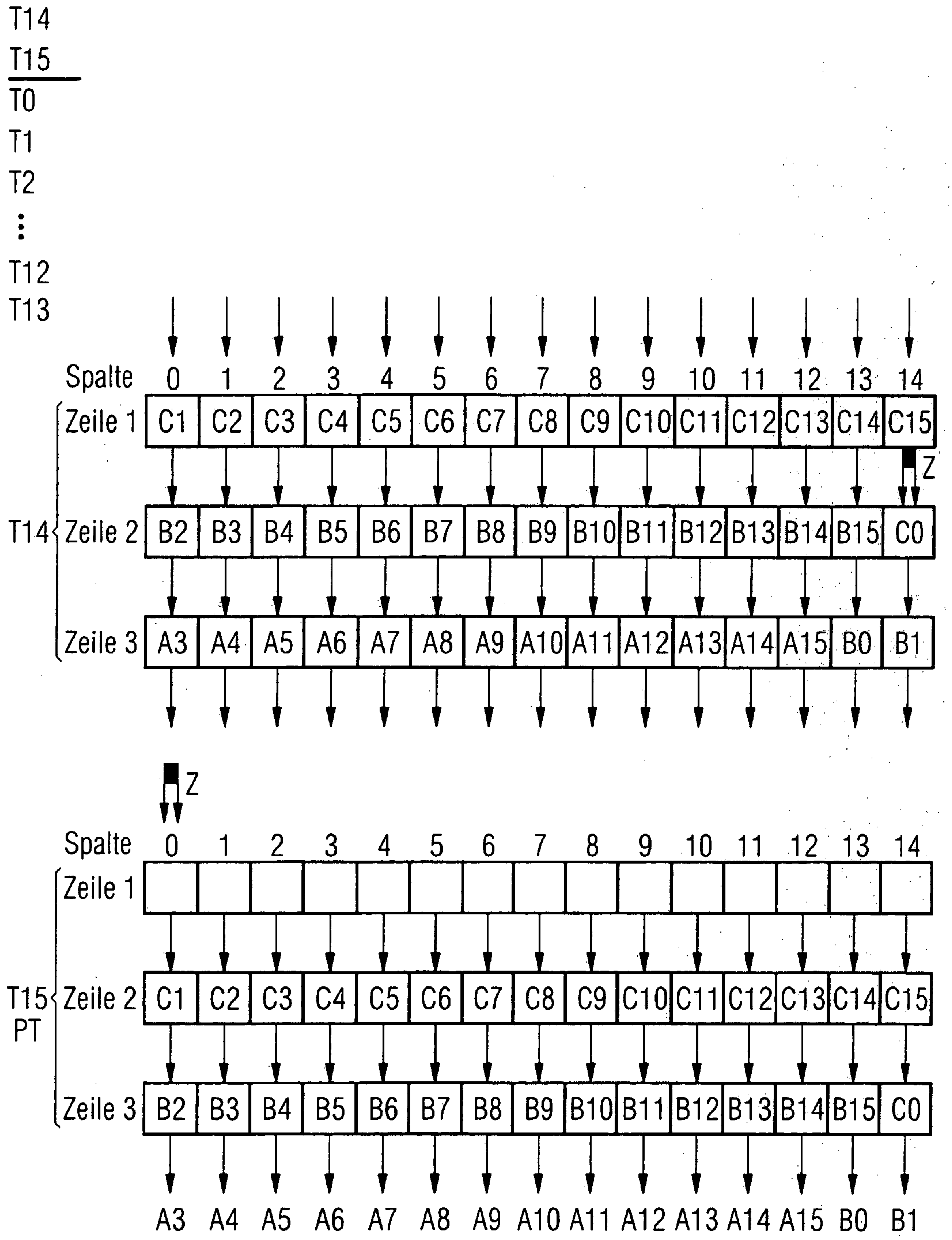
T14
T15
T0
T1
T2
T12
T13
Spalte 0 1 2 3 4 5 6 7 8 9 10 11 12 13 14
Zeile 1 C1 C2 C3 C4 C5 C6 C7 C8 C9 C10 C11 C12 C13 C14 C15
Z
T14
Zeile 2 B2 B3 B4 B5 B6 B7 B8 B9 B10 B11 B12 B13 B14 B15 C0
Zeile 3 A3 A4 A5 A6 A7 A8 A9 A10 A11 A12 A13 A14 A15 B0 B1
Z
Spalte 0 1 2 3 4 5 6 7 8 9 10 11 12 13 14
Zeile 1
T15
PT
Zeile 2 C1 C2 C3 C4 C5 C6 C7 C8 C9 C10 C11 C12 C13 C14 C15
Zeile 3 B2 B3 B4 B5 B6 B7 B8 B9 B10 B11 B12 B13 B14 B15 C0
A3 A4 A5 A6 A7 A8 A9 A10 A11 A12 A13 A14 A15 B0 B1

FIG 4B

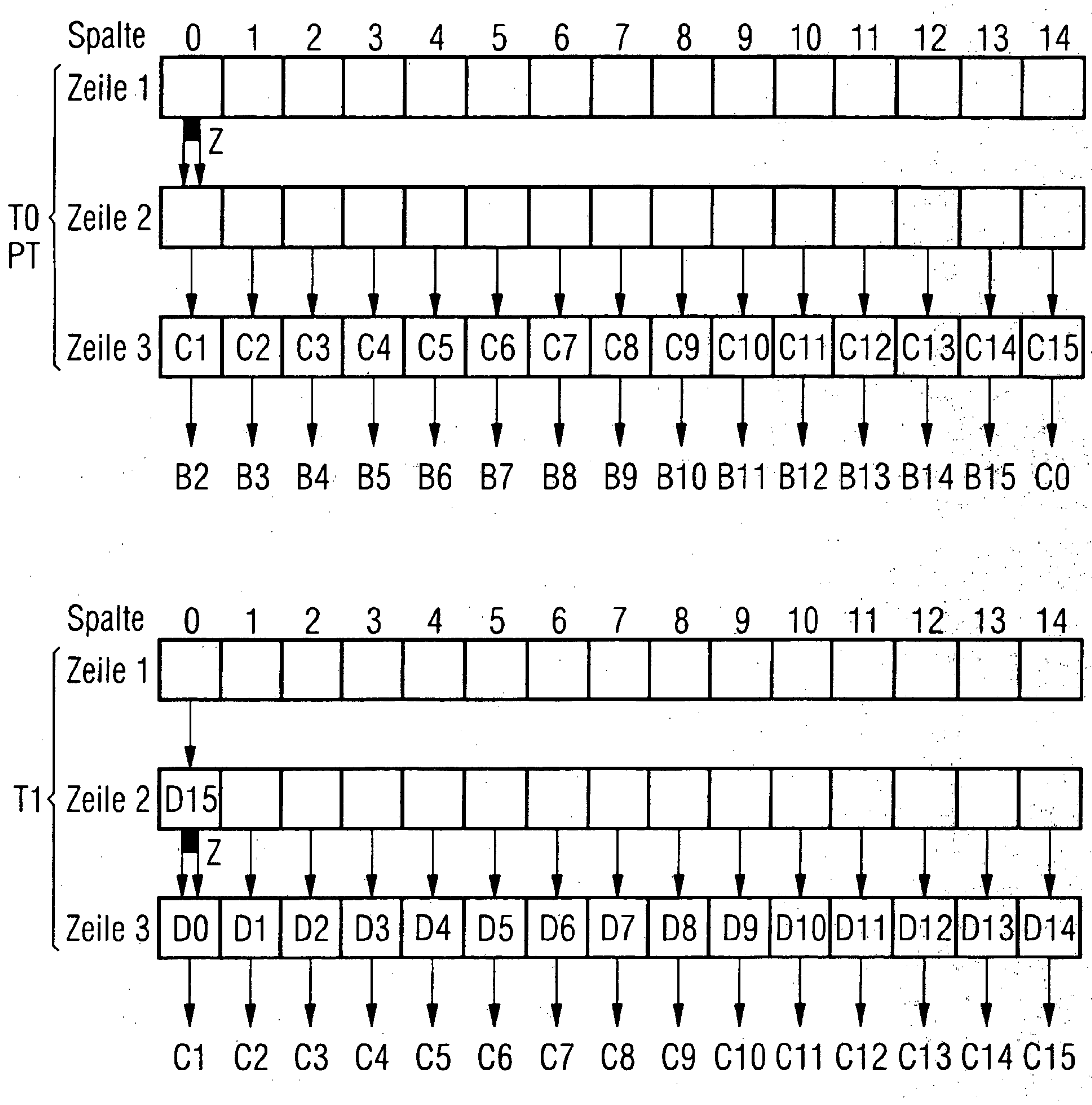
Spalte
0 1 2 3 4 5 6 7 8 9 10 11 12 13 14
Zeile 1
Z
T0
PT
Zeile 2
Zeile 3
C1 C2 C3 C4 C5 C6 C7 C8 C9 C10 C11 C12 C13 C14 C15
B2 B3 B4 B5 B6 B7 B8 B9 B10 B11 B12 B13 B14 B15 C0
Spalte
0 1 2 3 4 5 6 7 8 9 10 11 12 13 14
Zeile 1
T1
Zeile 2
D15
Z
Zeile 3
D0 D1 D2 D3 D4 D5 D6 D7 D8 D9 D10 D11 D12 D13 D14
C1 C2 C3 C4 C5 C6 C7 C8 C9 C10 C11 C12 C13 C14 C15

FIG 5

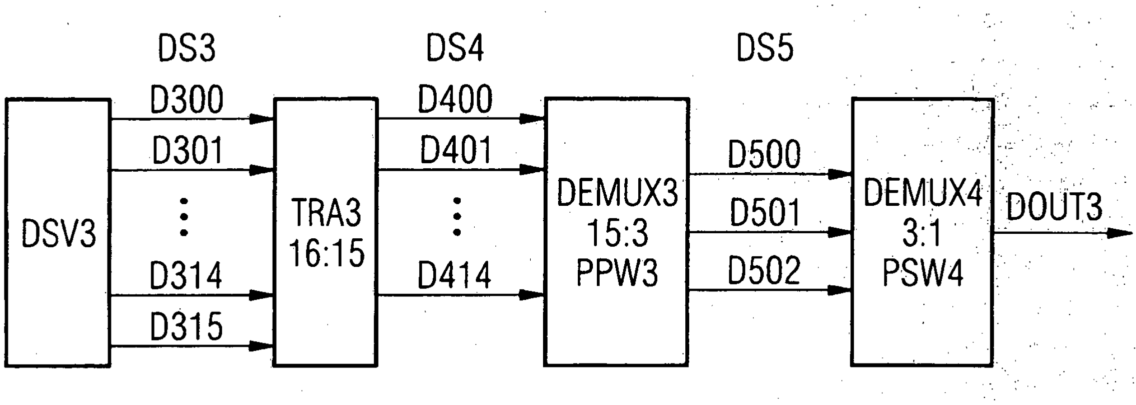
DS3
DS4
DS5
D300
D301
D314
D315
D400
D401
D414
D500
D501
D502
DSV3
TRA3
16:15
DEMUX3
15:3
PPW3
DEMUX4
3:1
PSW4
DOUT3

FIG 6

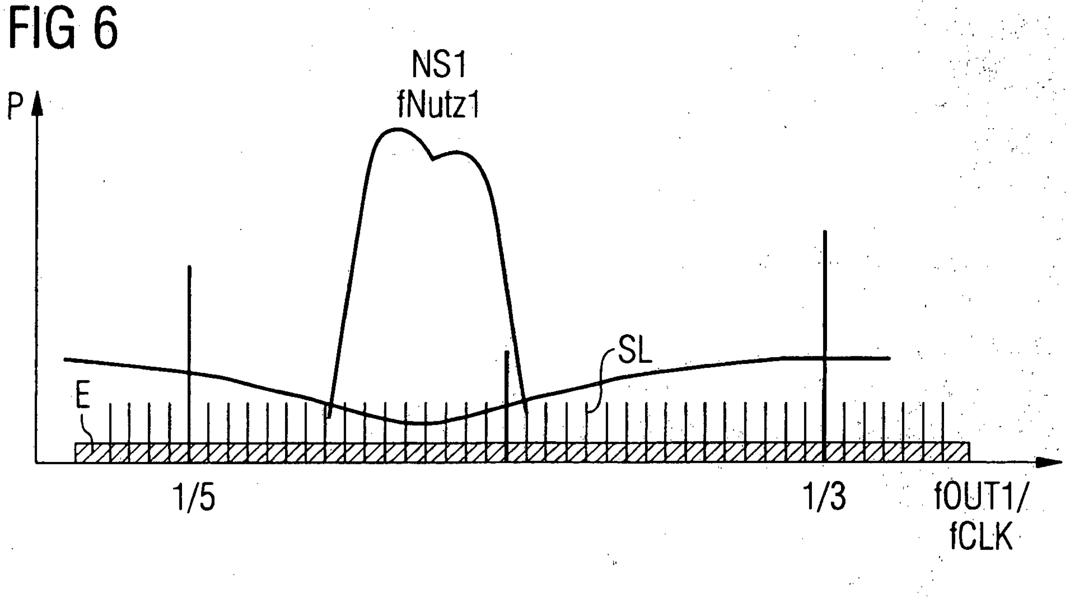
NS1
fNutz1
P
SL
E
1/5
1/3
fOUT1/
fCLK

FIG 7

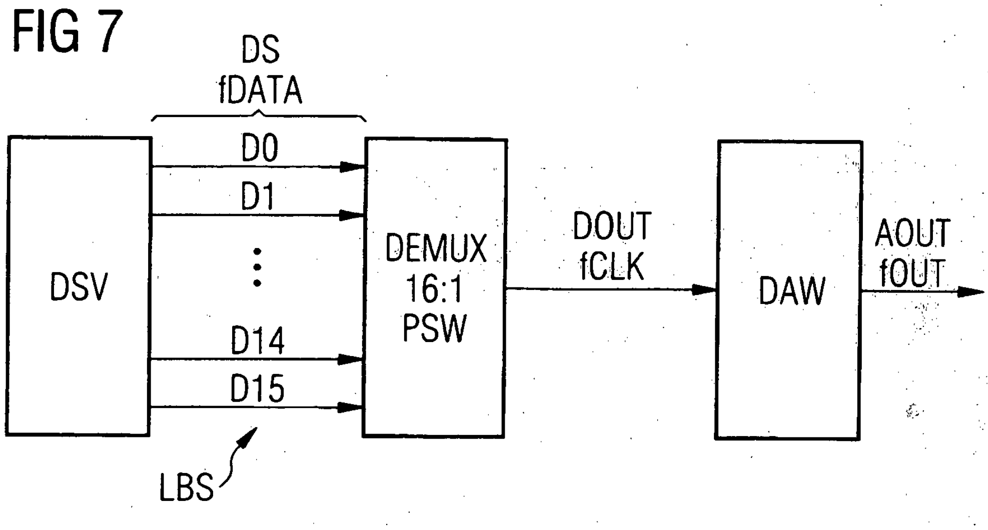
DS
fDATA
D0
D1
DSV
D14
D15
DEMUX
16:1
PSW
DOUT
fCLK
DAW
AOUT
fOUT
LBS

FIG 8

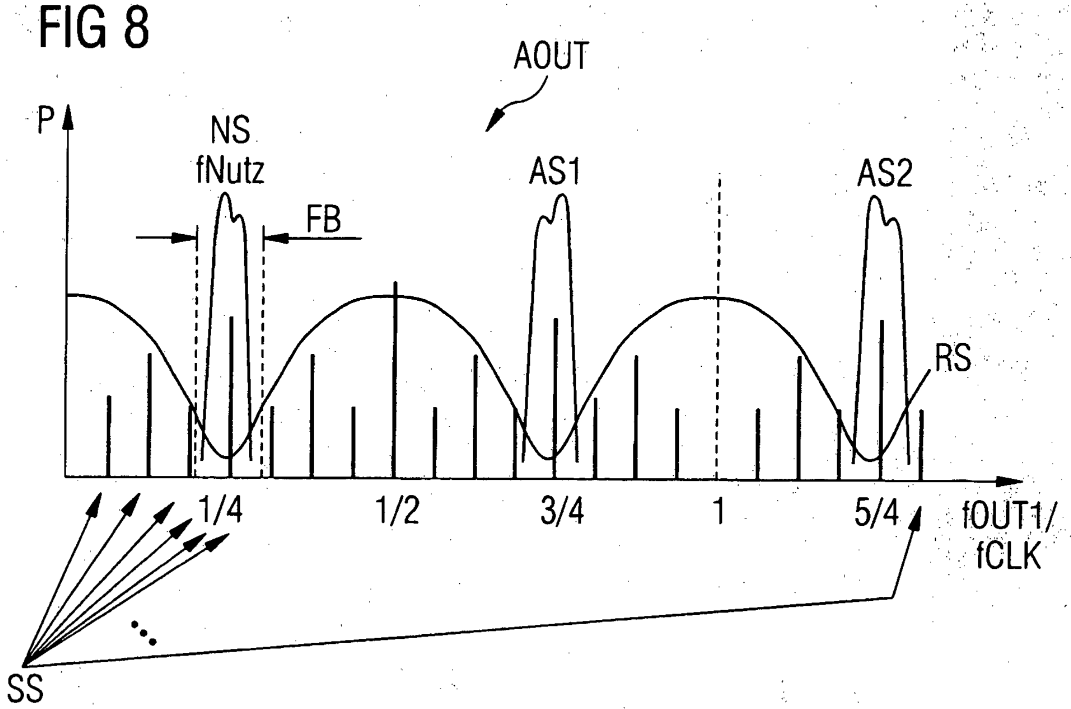
AOUT
P
NS
fNutz
FB
AS1
AS2
RS
1/4
1/2
3/4
1
5/4
fOUT1/
fCLK
SS

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **CAO et al.** Transmitter and Receiver in Standard 0.18-μm CMOS. *OC-192,* 2002